# EUROPÄISCHE PATENTSCHRIFT

(11) **EP 1 921 030 B1**
(45) Veröffentlichungstag und Bekanntmachung des Hinweises auf die Patenterteilung: **03.08.2011**
(21) Anmeldenummer: 07021881.3
(22) Anmeldetag: 12.11.2007
(51) Int. Cl.: B65G 47/90, B65G 47/91, B25J 15/00, B65G 61/00

(54) **Palettiergreifer mit Niederhalter**
Palletiser gripper with clamp
Transpalette doté d'un élément de retenue

(30) Priorität: 13.11.2006 DE 102006053695
(43) Veröffentlichungstag der Anmeldung: 14.05.2008
(73) Patentinhaber: Müller, Hermann, 88279 Amtzell (DE)
(72) Erfinder: Müller, Hermann, 88279 Amtzell (DE)
(74) Vertreter: Riebling, Peter

(56) Entgegenhaltungen:
- EP-A- 1 314 665
- EP-A- 1 627 843
- DE-A1- 2 330 460
- DE-A1- 10 353 351
- JP-A- 7 136 966
- US-A- 4 790 587

## Beschreibung

Die Erfindung betrifft einen Palettiergreifer mit Niederhalter nach dem Oberbegriff des Patentanspruches 1.

DD 292204 A5 beschreibt eine automatische Handhabungsvorrichtung, bei der ein Transport eines flexiblen Folien- oder Heftstapels oder sonstigen Waren wie Kisten, Kartons, Container und dergleichen durch diese automatische Handhabungsvorrichtung gezeigt ist, wobei zwei in einem Abstand voneinander angeordnete Tragelemente (z. B. Zinken) im Wesentlichen horizontal und parallel gerichtet sind, um den zu ergreifenden Stapel von unten zu unterfahren und anzuheben.

Als Niederhalter (Gegenfläche zu den genannten Tragelementen) wird ein Pressbacken beschrieben, der eine konvexe Wölbung aufweist, um so eine Gegenfläche für den Stapel zu bilden. Mit diesem Niederhalter wird die konvex ausgebildete Gegenfläche auf der Oberseite des Stapels gepresst, um eine günstige Anpassung an die flexible Oberfläche des Stapels zu bilden.

Nachteil des bekannten Niederhalters ist jedoch, dass ein starrer Niederhalter mit einer konvexen Gegenfläche nicht geeignet ist, sich an unterschiedliche Konturen eines Stapels anzupassen. Solche unterschiedlichen Konturen eines Stapels kommen vor allem bei unregelmäßig geformten Gegenständen vor, die mit dem Palletiergreifer erfasst, palettiert oder depalettiert werden sollen.

Solche unregelmäßig geformten Gegenstände sind z. B. empfindliche Kartons, Dosen, Flaschen, Container, Kisten und dergleichen mehr. Insbesondere geht es auch um eine schonende Niederhaltekraft auf den zu ergreifenden Stapel, was mit dem Gegenstand der DD 292204 A5 nicht gegeben ist. Dort wird die Gegenkraft nur durch den Vorschubantrieb des Niederhalters in Richtung auf die Oberfläche des zu ergreifenden Stapels eingestellt, was mitunter bei empfindlichen Gegenständen zu schweren Flächendrücken führt, die zu einer Beschädigung der Gegenstände führen können.

Die EP 1627843 A1, die DE 2330460 A1, sowie die US 4790587 A offenbaren allesamt die Merkmale des Oberbegriffs des Patentanspruchs 1, nämlich einen Palettiergreifer mit Niederhalter, sowie mit Tragelement für die Aufnahme von Produkten, welche zwischen Niederhalter und Tragelement gehalten bzw. geklemmt werden können, wobei der Niederhalter gegenüber der Oberfläche des zu haltenden Produktes zu- und wegstellbar ausgebildet ist und wobei an der Seite in Richtung der Warenoberfläche des Niederhalters mindestens ein Schlauchelement angeordnet ist, welches als Kissenelement mit einer Klemmfläche ausgebildet ist, und schlagartig mit Luft befüllbar ist und damit mit seiner Klemmfläche das Produkt hält bzw. klemmt.

Der Erfindung liegt deshalb die Aufgabe zugrunde, einen Palettiergreifer mit Niederhalter der eingangs genannten Art so weiterzubilden, dass unregelmäßige Oberflächen von zu ergreifenden Gegenständen betriebssicher und mit geringer Beschädigungsgefahr niedergehalten werden.

Zur Lösung der gestellten Aufgabe ist die Erfindung durch die technische Lehre des Patentanspruches 1 gekennzeichnet

Wesentliches Merkmal der Erfindung ist, dass an der Klemmfläche des Kissenelements Saugglocken bzw. Sauger luftschlüssig angeordnet sind.

Die Erfindung beschreibt dem gemäß sozusagen einen "Airbag", der an der Unterseite des Niederhalter des Palettiergreifers angeordnet ist und den wesentlichen Vorteil hat, dass er schlagartig innerhalb von 30 Millisekunden mit einer Druckluft gefüllt werden kann, wodurch eine besonders schonende Anlage des Niederhalters an die Oberfläche des zu ergreifenden Warenpaketes gegeben ist.

Ein weiterer wesentlicher Vorteil mit dem schlagartig sich aufblasenden Schlauchelement ist ferner, dass Geschwindigkeit beim Ergreifen des Stapels eingespart wird. Es ist nämlich nicht mehr erforderlich, mit relativ langsamer Vorschubgeschwindigkeit den Niederhalter vollständig gegen die Oberfläche des zu ergreifenden Stapels zu führen, weil es ausreicht, den Niederhalter beispielsweise nur noch mit einem Abstand von 100 Millimeter gegen die Oberfläche des Stapels (mit relativ langsamer Vorschubgeschwindigkeit) zu füllen. Der Rest des Vorschubes wird eingespart, indem in diesem Zustand das Schlauchelement schlagartig aufgeblasen wird und sich demzufolge kraft- und formschlüssig an die Oberseite des zu klemmenden Stapels anlegt.

Damit sind wesentlich höhere Verarbeitungsgeschwindigkeiten möglich, denn es wird die Einspannzeit für den Stapel wesentlich verkürzt, weil das Schlauchelement schlagartig aufgeblasen wird.

Die vorliegende Erfindung ist nicht auf die Verwendung eines Palettiergreifers beschränkt, der im nachfolgend beschriebenen Ausführungsbeispiel aus einem Gabelschlitten besteht, der die Unterseite des Stapels untergreift und den Stapel somit trägt. Nach diesem Ausführungsbeispiel wird der Stapel dadurch aus dem Palettiergreifer entfernt, indem der gesamte Gabelschlitten mit den daran angeordneten Zinken zurückgefahren wird und dadurch der Stapel am Ort seiner Ablage auf einer Aufstellfläche abgesetzt wird.

Hierauf ist die Erfindung jedoch nicht beschränkt. Es kommen sämtliche Palettiergreifer in Betracht, die nicht notwendigerweise einen zurückziehbaren Gabelschlitten mit daran angeordneten Zinken aufweisen, die zur Untergreifung des Stapels geeignet sind. Stattdessen kommen auch andere Palettiergreifer in Betracht, nämlich starre Zinken, die den Stapel untergreifen, so dass der gesamte Palettiergreifer aus dem Stapel entfernt wird, ohne dass es eines in horizontale Richtung verfahrbaren Gabelschlittens bedarf.

Ebenso ist es möglich, einen Palettiergreifer mit einem in horizontaler Richtung arbeitenden Schieber zu verwenden, der den zu vereinzelnden Stapel von einer entsprechenden Auflagefläche wegschiebt.

Damit ist nachgewiesen, dass die Erfindung mit dem schlagartig aufblasbaren Niederhalter unabhängig von der Art des Palettiergreifers arbeitet.

Ein solches schlagartig aufblasbares Schlauchelement wird innerhalb einer Zeit von beispielsweise 10 Mikrosekunden bis 1 Millisekunde aufgeblasen, und es wird hierbei ein Luftdruck von z. B. 6 bar verwendet, welcher geeignet ist, dieses Schlauchelement aufzublasen.

Statt eines runden Schlauchelementes werden selbstverständlich auch alle anderen Profilquerschnitte für derartige aufblasbare Elemente beansprucht. Statt eines runden Querschnittes können auch unrunde, asymmetrische und auch mehrgestaltige Formgebungen eines Schlauchelementes verwendet werden. Demzufolge können auch Schlauchkissen mit quadratischer oder rechteckiger Grundfläche (Klemmfläche) verwendet werden, und es können auch mehrere derartige aufblasbare Schlauchelemente parallel und nebeneinander in einer gleichen Klemmebene angeordnet werden.

Ebenso können unregelmäßig geformte Schlauchkissen verwendet werden.

Soweit es um einen Palettiergreifer nach dem Ausführungsbeispiel geht, wird bevorzugt, wenn mindestens am Grundkörper des Palettiergreifers in Richtung auf die Oberseite des zu haltenden Stapels noch zusätzliche Sauger angeordnet sind, die mit eigenen Hubantrieben versehen sind.

In einer Weiterbildung der Erfindung ist es auch vorgesehen, dass nicht nur am Grundkörper des Palettiergreifers höheneinstellbare Sauger angeordnet sind, sondern dass solche höheneinstellbaren Sauger auch noch an dem in horizontaler Richtung bewegbaren Gabelschlitten angeordnet sind.

Auf diese Weise wird dem Palettiergreifer eine doppelte Funktion zugeordnet.

Zunächst einmal kann er zum Stapeln und Entstapeln von Kartons auf einer Palette verwendet werden, indem der Gabelschlitten mit seinen daran angeordneten Zinken in horizontale Richtung verfahrbar ist und deshalb diese Zinken geeignet sind, einen Karton zu untergreifen und auf einen bestimmten Lagerplatz zu tragen. Sobald der Karton sich auf dem Lagerplatz befindet, wird der Gabelschlitten mit den daran befestigten Zinken gegenüber einer ortsfesten Anschlagwand des Grundkörpers zurückgezogen, und der Karton wird somit auf der Abstellfläche abgesetzt.

Diese Einrichtung kann sowohl zum Bestücken von Paletten mit Hilfe von Gegenständen als auch zum Entladen von Gegenständen auf einer Palette verwendet werden.

Zusätzlich hat der Palettiergreifer jedoch auch noch die zweite Funktion, dass er mit Hilfe der beschriebenen Sauger auch noch in der Lage ist, flächige Gegenstände, wie z. B. eine Zwischenlage aus Papier oder Karton zu ergreifen und unabhängig von der Stellung des Gabelschlittens auf einen Lagerplatz zu bringen oder von diesem Lagerplatz abzuholen.

Hat er eine derartige Zwischenlage mit seinen Saugern ergriffen, dann kann diese Zwischenlage beispielsweise auf einer Palette angeordnete Lage von Kartons oben aufgebracht werden, um danach folgend die nächste Lage von Kartons auf dieser Zwischenlage aufzustapeln.

Der Palettiergreifer hat also zwei unterschiedliche Funktionen, deren Kombination untereinander aber auch deren Funktion in Einzeistellung als erfindungswesentlich beansprucht wird.

Damit ist durch die Anordnung der Sauger nachgewiesen, dass beliebige Produkte (demzufolge nicht nur flächige Karton- oder Papierprodukte) durch die Sauger aufgenommen und an einen bestimmten anderen Lagerplatz transportiert werden können.

Der Palettiergreifer hat also sowohl eine mechanische Greiferfunktion mit einem mit Zinken versehenen Gabelschlitten als auch eine Saugfunktion, wobei er allein durch Saugkraft in der Lage ist, entsprechende Gegenstände von einem Lagerplatz abzuholen und auf einen anderen Lagerplatz zu verbringen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.
Es zeigen:
- Figur 1:: perspektivische Seitenansicht eines Palettiergreifers in zurückgezogener Stellung des Gabelschlittens
- Figur 2:: die gleiche Darstellung wie Figur 1 mit der Transportstellung des Palettiergreifers
- Figur 3:: die Darstellung verschiedener Ausbildungen von Schlauchelementen nicht gemäß der Erfindung für die Ausbildung des Niederhalters

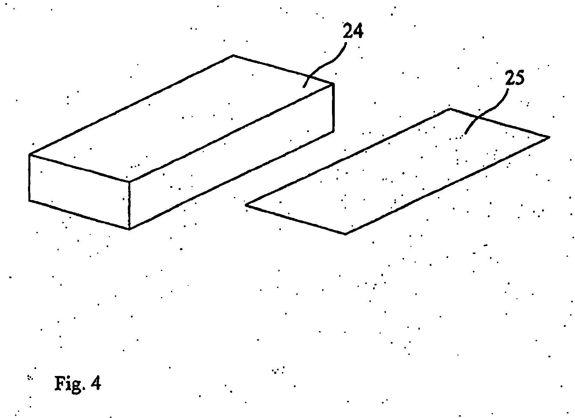

- Figur 4:: eine weitere Ausführungsform gegenüber Figur 3
- Figur 5:: eine dritte Ausführungsform gegenüber Figur 3
- Figur 6:: eine vierte Ausführungsform gegenüber Figur 3
- Figur 7:: eine Ausführungsform gemäß der Erfindung gegenüber Figur 3 mit in dem Schlauchelement des Niederhaltes angeordneten Saugelement
- Figur 8:: eine Ausführungsform nicht gemäß der Erfindung gegenüber Figur 3

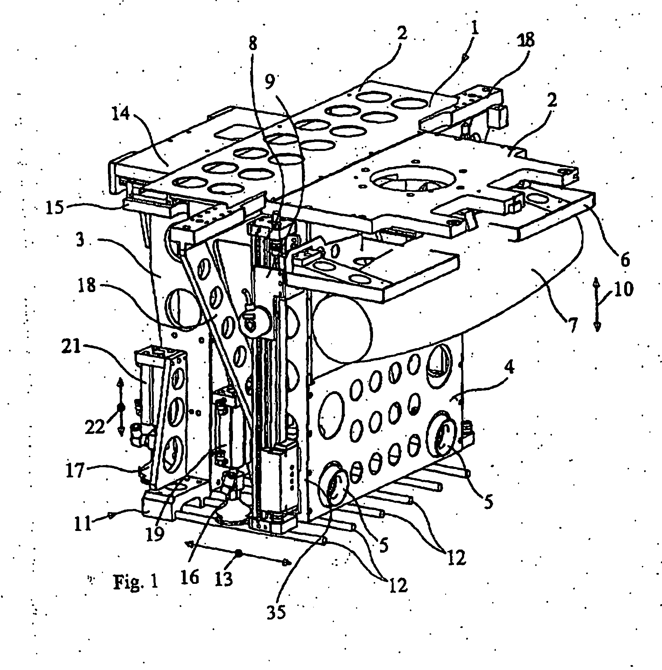

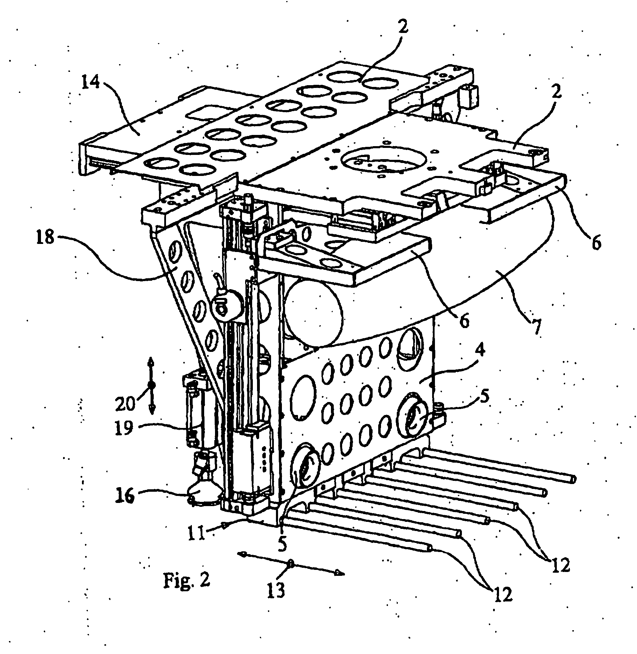

In den Figuren 1 und 2 ist allgemein ein Palettiergreifer dargestellt, der aus einem festen Grundkörper 1 besteht, der im Wesentlichen aus zwei miteinander verbundenen Platten 2 besteht, wobei eine Platte nach hinten in Form einer Führungsplatte 14 verlängert ist.

Von der Platte 2 des Grundkörpers 1 nach unten erstrecken sich Seitenteile 35, die im Abstand davon noch mit seitlichen Streben 18 verstärkt sind, um so eine Anschlagwand 4 zu stabilisieren, die fest mit der Platte 2 des Grundkörpers 1 verbunden ist.

An dem Seitenteil 35 ist hierbei eine Längsführung 8 für einen Mitnehmerschlitten 9 ausgebildet, welcher den Verschiebeantrieb für den daran befestigten Niederhalter 6 ausbildet.

Jeder der Niederhalter 6 (plattenförmige Elemente) sind deshalb in der Längsführung 8 in den Pfeilrichtungen 10 gegenüber der Oberfläche eines zu haltenden Produktes zustellbar und wegstellbar.

In der Anschlagwand 4 des Grundkörpers 1 sind noch in horizontaler Richtung ausgerichtete Sauger 5 vorhanden, die zur Sicherung des dort anschlagenden Produktes geeignet sind. Ferner wird über die Sauger 5 eine Kontrolle durchgeführt, ob ein Produkt überhaupt an der Anschlagwand 4 anliegt oder nicht.

Wichtig ist nun, dass an der Unterseite der Niederhalter 6 ein erfindungsgemäßes Schlauchelement 7 angeordnet ist, wie es schlagartig aufblasbar ist.

Im gezeigten Ausführungsbeispiel besteht das Schlauchelement 7 aus einem die beiden Niederhalter 6 verbindenden Schlauchelement, welches einen runden Querschnitt aufweist. Im aufgeblasenen Zustand kann sich dieses Schlauchelement 7 auch konvex aufwölben, um so sich jeder beliebigen Oberfläche des zu haltenden Produkts anzupassen.

Wichtig ist ferner, dass am Grundkörper 1 ein in horizontaler Richtung bewegbarer Gabeischlitten 11 angeordnet ist, der an einem Schlitten 15 sitzt, der verschiebbar in der grundkörperseitigen Führungsplatte 14 geführt ist.

Der Schlitten 15 ist hierbei über eine Strebe 3 mit dem unteren Teil des Gabelschlittens 11 verbunden, wobei an dem dort gezeigten Grundkörper des Gabelschlittens 11 nach vorne gerichtete Zinken 12 im gegenseitigen Abstand zueinander angeordnet sind.

Demzufolge ist der gesamte Gabelschlitten 11 in den Pfeilrichtungen 13 in Bezug zu der Anschlagwand 4 verschiebbar.

Entsprechend der allgemeinen Beschreibung sind am Grundkörper 1 noch nach unten gerichtete Sauger 16 vorgesehen, die an einer zugeordneten Hubeinrichtung 19 angeordnet sind. Demzufolge können die Sauger 16 gegenüber der Oberfläche des zu ergreifenden Produktes zu- und weggestellt werden. Das Produkt wird dann durch Saugkraft von dem Sauger 16 aufgenommen und dort festgehalten.

Weiterhin ist vorgesehen, dass auch am Gabelschlitten 11 entsprechende Sauger 17 angeordnet sind, denen jeweils eine eigene Hubeinrichtung 21 zugeordnet ist, so dass sowohl die Sauger 16 in den Pfeilrichtungen 20 zu dem Produkt zu- und wegstellbar sind als auch die Sauger 17 in den Pfeilrichtungen 22.

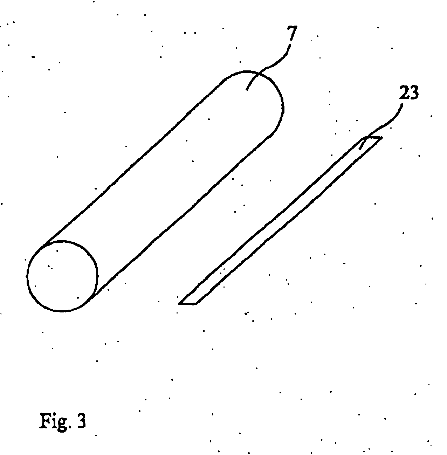

Gemäß Figur 3 (nicht gemäß der Erfindung) bildet das Schlauchelement 7 demzufolge eine relativ schmale Klemmfläche 23, wie es dort dargestellt ist.

Gemäß der Erfindung ist vorgesehen, dass als Schlauch element 7 ein Kissenelement 24 verwendet wird, welches eine dementsprechend größere Klemmfläche 25 aufweist.

Selbstverständlich ist es nicht lösungsnotwendig, dass das Kissenelement 24 rechteckförmig ausgebildet ist. Es kann quadratisch, halbrund, elliptisch oder mit beliebig anderer Klemmfläche 25 ausgebildet sein.

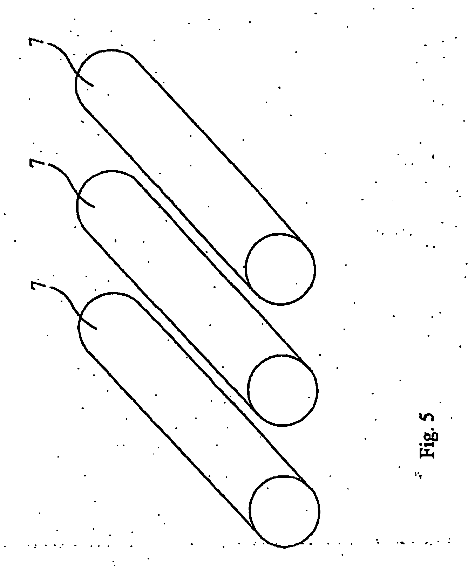

Ebenso ist es gemäß Figur 5 möglich, mehrere Schlauchelemente 7 parallel und in gegenseitigem Abstand anzuordnen, um so eine unterbrochene Klemmfläche zu bilden.

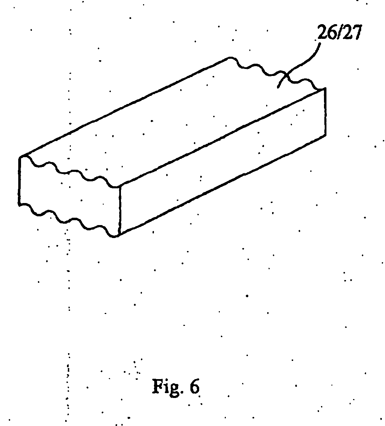

Die Figur 6 zeigt ferner, dass ein Kissenelement 27 nicht unbedingt eine glatte Oberfläche aufweisen muss. Sie kann in bestimmter Weise profiliert werden und demzufolge eine profilierte Klemmfläche 26 ausbilden, wie dies in Figur 6 dargestellt ist.

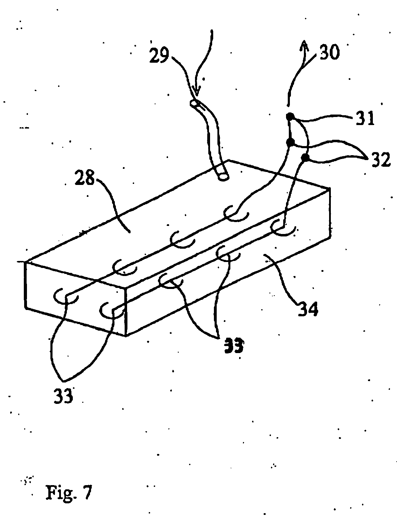

Die Figur 7 zeigt ferner ein Kissenelement 28 gemäß der Erfindung, welches über eine Druckzuführung 29 schlagartig mit einem Überdruck gefüllt werden kann. Gleichzeitig zeigt diese Zeichnung aber auch, dass im Bereich der Auflagefläche 34 (Klemmfläche) eine Vielzahl von Saugern 33 eingebaut sind, die über gemeinsame Saugschläuche 32 luftschlüssig miteinander verbunden sind und gegenüber dem Innenraum des Kissenelementes abgedichtet sind.
Die Saugschläuche 32 werden in einem gemeinsamen Sauganschluss 31 zusammengeführt, und es wird dort ein entsprechendes, geeignetes Vakuum angelegt, welches in Pfeilrichtung 30 die Luft aus den Saugern 33 absaugt.

Demzufolge kann durch schlagartige Luftzuführung über die Druckzuführung 29 das Kissenelement 28 aufgeblasen werden und legt sich demzufolge mit seiner Auflagefläche 34 kraft- und formschlüssig auf dem zu haltenden Produkt an und zusätzlich kann das zu haltende Produkt noch durch die entsprechenden Sauger 33 zusätzlich an der Klemmfläche saugend festgehalten werden.

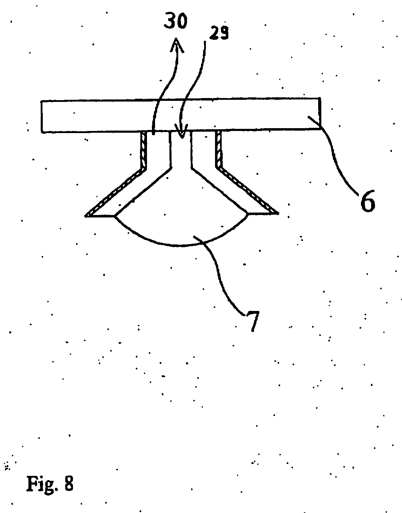

Die Figur 8 zeigt ein einzelnes Schlauchelement 7 nicht gemäß der Erfindung, welches von einem Sauger umgeben ist und am Niederhalter 6 montiert ist. Hiermit kann ein Saugen mit zusätzlichem Niederhalten/ Sichern/ Lösen erzielt werden. Wird ein Vakuum in Pfeilrichtung 30 angelegt, so können Waren gehalten werden. Wird über 29 noch zusätzlich Druck zugeführt, kann die Ware abgedrängt oder gesichert werden.

### Zeichnungslegende

- 1: Grundkörper
- 2: Platt
- 3: Strebe
- 4: Anschlagwand
- 5: Sauger
- 6: Niederhalter
- 7: Schlauchelement
- 8: Längsführung
- 9: Mitnehmerschlitten
- 10: Pfeilrichtung
- 11: Gabelschlitten
- 12: Zinken
- 13: Pfeilrichtung
- 14: Führungsplatte
- 15: Schlitten
- 16: Sauger (Zwischensauger)
- 17: Sauger (Schlitten)
- 18: Strebe
- 19: Hubeinrichtung
- 20: Pfeilrichtung
- 21: Hubeinrichtung (Schlitten)
- 22: Pfeilrichtung
- 23: Klemmfläche
- 24: Kissenelement
- 25: Klemmfläche
- 26: Klemmfläche
- 27: Kissenelement
- 28: Kissenelement
- 29: Druckzuführung
- 30: Pfeilrichtung
- 31: Sauganschluss
- 32: Saugschlauch
- 33: Sauger
- 34: Auflagefläche
- 35: Seitenteil

## Patentansprüche

1. Palettiergreifer mit Niederhalter (6), sowie mit Tragelement (11) für die Aufnahme von Produkten, welche zwischen Niederhalter (6) und Tragelement (11) gehalten bzw. geklemmt werden können, wobei der Niederhalter (6) gegenüber der Oberfläche des zu haltenden Produktes zu- und wegstellbar ausgebildet ist und wobei an der Seite in Richtung der Warenoberfläche des Niederhalters (6) mindestens ein Schlauchelement (7) angeordnet ist, welches als Kissenelement (24, 26, 28) mit einer Klemmfläche (23, 25, 26, 34) ausgebildet ist, und schlagartig mit Luft befüllbar ist und damit mit seiner Klemmfläche (23, 25, 26, 34) das Produkt hält bzw. klemmt, **dadurch gekennzeichnet, dass** an der Klemmfläche (25, 26, 34) des Kissenelements (24, 26, 28) Saugglocken bzw. Sauger (33) luftschlüssig angeordnet sind.

2. Palettiergreifer nach Anspruch 1, **dadurch gekennzeichnet, dass** dieser aus einem festen Grundkörper (1) gebildet ist und im wesentlichen zwei miteinander verbundene Platten (2) aufweist, wobei eine Platte in Form einer Führungsplatte (14) verlängert ist, wobei sich von der Platte (2) Seitenteile (35) nach unten erstrecken, welche mit seitlichen Streben (18) verstärkt sind und eine Anschlagwand (4) stabilisieren, die mit der Platte (2) verbunden ist.

3. Palettiergreifer nach einem der vorhergehenden Ansprüche 1 bis 2, **dadurch gekennzeichnet, dass** dieser einen in horizontaler Richtung verfahrbaren oder starren Gabelschlitten (11) als Tragelement (11) aufweist, welcher die Unterseite eines zu transportierenden Stapels des Produktes untergreift und trägt.

4. Palettiergreifer nach mindestens Anspruch 2, **dadurch gekennzeichnet, dass** das Seitenteil (35) eine Längsführung (8) für einen Mitnehmerschlitten (9) aufweist, welcher einen Verschiebeantrieb des daran befestigten, plattenförmigen Niederhalters (6) ausbildet, der in vertikalen Richtung (10) gegenüber der Oberfläche des zu haltenden Produktes zu- und wegstellbar ausgebildet ist

5. Palettiergreifer nach mindestens Anspruch 2, **dadurch gekennzeichnet, dass** in der Anschlagwand (4) des Grundkörpers (1) in horizontaler Richtung ausgerichtete Sauger (5) angeordnet sind, welche das Anliegen eines Produktes an der Anschlagwand (4) kontrollieren und das dort anschlagende Produkt sichern.

6. Palettiergreifer nach einem der vorhergehenden Ansprüche 1 bis 5, **dadurch gekennzeichnet, dass** das Schlauchelement (7) einen runden Querschnitt aufweist, welcher sich im aufgeblasenen Zustand konvex aufwölbt.

7. Palettiergreifer nach mindestens Ansprüche 2 und 3, **dadurch gekennzeichnet, dass** der am Grundkörper (1) quer zur Richtung (10) der Halte- bzw. Klemmkraft bewegbarer Gabelschlitten (11) an einem Schlitten (15) angeordnet ist, welcher in der grundkörperseitigen Führungsplatte (14) verschiebbar geführt ist und mittels einer Strebe (3) mit dem unteren Teil des Gabelschlittens (11) verbunden ist.

8. Palettiergreifer nach mindestens Ansprüche 2 und 3 , **dadurch gekennzeichnet, dass** der Gabelschlitten (11) nach vorne gerichtete im gegenseitigen Abstand zueinander angeordnete Zinken (12) aufweist und in horizontalen Richtungen (13) mit Bezug zur Anschlagwand (4) verschiebbar ist.

9. Palettiergreifer nach mindestens Anspruch 2, **dadurch gekennzeichnet, dass** der Grundkörper (1) zusätzlich an einer zugeordneten Hubeinrichtung (19) angeordnete Hubeinrichtungs-Sauger (16) aufweist, welche gegenüber der Oberfläche des zu ergreifenden Produktes zu- und wegstellbar ausgebildet sind und das Produkt mittels Saugkraft aufnehmen und festhalten.

10. Palettiergreifer nach Anspruch 3 und 9, **dadurch gekennzeichnet, dass** der Gabelschlitten (11) Gabelschlitten-Sauger (17) aufweist, denen jeweils eine eigene Hubeinrichtung (21) zugeordnet ist, wobei die Hubeinrichtungs-Sauger (16) und die Gabelschlitten-Sauger (17) in Richtung (10, 36) der Halte- bzw. Klemmkraft zu dem Produkt zu- und wegstellbar ausgebildet sind.

11. Palettiergreifer nach einem der vorhergehenden Ansprüche 1 bis 10, **dadurch gekennzeichnet, dass** die Klemmfläche (23, 25, 26, 34) rechteckig, quadratisch rund, halbrund, oder elliptisch ausgebildet ist.

12. Palettiergreifer nach einem der vorhergehenden Ansprüche 1 bis 10, **dadurch gekennzeichnet, dass** dieser mehrere, parallel zueinander angeordnete Schlauchelemente (7) aufweist, die eine unterbrochene Klemmfläche (26) bilden.

13. Pelettiergreifer nach Anspruch 1 oder 12, **dadurch gekennzeichnet, dass** die Klemmfläche (25, 26, 34) glatt oder profiliert ausgebildet ist.

14. Palettiergreifer nach einem der vorhergehenden Ansprüche 1 bis 13, **dadurch gekennzeichnet, dass** die Sauger (33) mittels gemeinsamer Saugschläuche (32) luftschlüssig miteinander verbunden sind, welche in einen gemeinsamen Sauganschluss (31) zusammenführen.

## Claims

1. Palletizing gripper with a holding-down device (6), and with a carrier element (11) to receive products that can be held and/or gripped between the holding-down device (6) and the carrier element (11), wherein the holding-down device (6) is configured to be displaceable towards or away from the surface of the product to be held, and wherein at least one bag element (7) is arranged on the side of the holding-down device (6) towards the surface of the goods, is configured as a pad element (24, 26, 28) with a gripping face (23, 25, 26, 34), and can be instantaneously filled with air so that the product is held and/or gripped by the said gripping face (23, 25, 26, 34), **characterized in that** suction domes and/or suction cups (33) are airtightly arranged on the gripping face (25, 26, 34) of the pad element (24, 26, 28).

2. Palletizing gripper according to Claim 1, **characterized in that** it is formed from a solid base body (1) and essentially comprises two plates (2) that are joined to each other, one plate being extended to form a guide plate (14), with side parts (35) extending downwards from the plate (2) which are reinforced with lateral struts (18) and stabilize an abutment wall (4) connected to the plate (2).

3. Palletizing gripper according to either of the preceding Claims 1 and 2, **characterized in that** it has a horizontally traversable or fixed fork carriage (11) as the carrier element (11), which reaches under the underside of a product stack to be transferred and carries it.

4. Palletizing gripper according to at least Claim 2, **characterized in that** the side part (35) has a longitudinal guide (8) for a drive carriage (9) which forms a displacement drive for the plate-like holding-down device (6) fixed thereto, which is configured to be displaceable in the vertical direction (10) towards or away from the surface of the product to be held.

5. Palletizing gripper according to at least Claim 2, **characterized in that** vertically aligned suction cups (5) are arranged in the abutment wall (4) of the base body (1) to verify that a product is in contact with the abutment wall (4) and secure the impinging product.

6. Palletizing gripper according to any one of the preceding Claims 1 to 5, **characterized in that** the bag element (7) has a round cross-section and presents a convex curvature when inflated.

7. Palletizing gripper according to at least Claims 2 and 3, **characterized in that** the fork carriage (11) which is traversable on the base body (1) at right angles to the direction (10) of holding or clamping force is arranged on a carriage (15) guided displaceably in the base-body-side guide plate (14) and connected by a strut (3) to the lower part of the fork carriage (11).

8. Palletizing gripper according to at least Claims 2 and 3, **characterized in that** the fork carriage (11) has forwards-pointing, spaced-apart tines (12), and is displaceable in horizontal directions (13) with respect to the abutment wall (4).

9. Palletizing gripper according to at least Claim 2, **characterized in that** the base body (1) additionally has lift suction cups (16) arranged on an associated lifting device (19) which are configured to be displaceable towards or away from the surface of the product to be grasped, and hold and secure the product by means of suction force.

10. Palletizing gripper according to Claims 3 and 9, **characterized in that** the fork carriage (11) has fork carriage suction cups (17) each with its own lifting device (21) assigned to it, the lift suction cups (16) and fork carriage suction cups (17) being configured to be displaceable towards or away from the product in the direction (10, 36) of holding or clamping force.

11. Palletizing gripper according to any one of the preceding Claims 1 to 10, **characterized in that** the clamping face (23, 25, 26, 34) has a rectangular, square, circular, semicircular or elliptical shape.

12. Palletizing gripper according to any one of the preceding Claims 1 to 10, **characterized in that** it has a plurality of bag elements (7) arranged parallel with each other that form an interrupted clamping face (26).

13. Palletizing gripper according to Claim 1 or Claim 12, **characterized in that** the clamping face (25, 26, 34) has a smooth or textured profile.

14. Palletizing gripper according to any one of the preceding Claims 1 to 13, **characterized in that** the suction cups (33) are airtightly interconnected by common suction hoses (32) leading into a common suction connection (31).

## Revendications

1. Elément de préhension pour palettisation avec un élément presseur (6) et un élément de support (11) pour recevoir des produits qui peuvent être tenus ou serrés entre l'élément presseur (6) et l'élément de support (11), étant précisé que l'élément presseur (6) est conçu pour pouvoir être approché et éloigné de la surface du produit à tenir, et que sur le côté dirigé vers la surface pour produit de l'élément presseur (6), il est prévu au moins un élément tubulaire (7) qui est conçu comme un élément formant coussin (24, 26, 28) avec une surface de serrage (23, 25, 26, 34) et qui est apte à être rempli d'air brusquement et tient ou serre ainsi le produit avec sa surface de serrage (23, 25, 26, 34), **caractérisé en ce qu'**il est prévu sur la surface de serrage (25, 26, 34) de l'élément formant coussin (24, 26, 28) des ventouses ou éléments d'aspiration (33).

2. Elément de préhension pour palettisation selon la revendication 1, **caractérisé en ce qu'**il se compose d'un corps de base fixe (1) et comporte essentiellement deux plaques (2) reliées entre elles, étant précisé qu'une plaque est prolongée sous la forme d'une plaque de guidage (14), et que des éléments latéraux (35) qui sont renforcés par des montants latéraux (18) et qui stabilisent une paroi de butée (4) reliée à la plaque (2) s'étendent vers le bas à partir de ladite plaque (2).

3. Elément de préhension pour palettisation selon l'une des revendications 1 à 2 précédentes, **caractérisé en ce qu'**il comporte comme élément de support (11) un coulisseau à fourche (11), mobile dans le sens horizontal ou fixe, qui vient en contact par-dessous avec le côté inférieur d'une pile à transporter du produit et porte ce côté inférieur.

4. Elément de préhension pour palettisation selon au moins la revendication 2, **caractérisé en ce que** l'élément latéral (35) comporte un guide longitudinal (8) pour un coulisseau d'entraînement (9) qui forme un entraînement coulissant de l'élément presseur en forme de plaque (6) fixé audit coulisseau (9), lequel élément presseur (6) est conçu pour pouvoir être approché et éloigné, dans le sens vertical (10), de la surface du produit à tenir.

5. Elément de préhension pour palettisation selon au moins la revendication 2, **caractérisé en ce qu'**il est prévu dans la paroi de butée (4) du corps de base (1) des ventouses (5) orientées dans le sens vertical qui contrôlent l'application du produit contre ladite paroi de butée (4) et bloquent le produit en butée à cet endroit.

6. Elément de préhension pour palettisation selon l'une des revendications 1 à 5 précédentes, **caractérisé en ce que** l'élément tubulaire (7) présente une section transversale ronde qui, à l'état gonflé, se bombe suivant une forme convexe.

7. Elément de préhension pour palettisation selon au moins les revendications 2 et 3, **caractérisé en ce que** le coulisseau à fourche (11) mobile sur le corps de base (1) transversalement par rapport au sens (10) de la force de retenue ou de serrage est disposé sur un coulisseau (15) qui est guidé coulissant dans la plaque de guidage (14) prévue côté corps de base et qui est relié à l'aide d'un montant (3) à la partie inférieure du coulisseau à fourche (11).

8. Elément de préhension pour palettisation selon au moins les revendications 2 et 3, **caractérisé en ce que** le coulisseau à fourche (11) présente des dents (12) dirigées vers l'avant et espacées les unes des autres, et est apte à coulisser dans des sens horizontaux (13) par rapport à la paroi de butée (4).

9. Elément de préhension pour palettisation selon au moins la revendication 2, **caractérisé en ce que** le corps de base (1) comporte en supplément des ventouses de dispositif de levage (16) qui sont disposées sur un dispositif de levage (19) associé, qui sont aptes à être approchées et éloignées de la surface du produit à saisir et qui reçoivent et immobilisent le produit à l'aide d'une force d'aspiration.

10. Elément de préhension pour palettisation selon les revendications 3 et 9, **caractérisé en ce que** le coulisseau à fourche (11) comporte des ventouses de coulisseau à fourche (17) à chacune desquelles est associé un dispositif de levage individuel (21), les ventouses de dispositif de levage (16) et les ventouses de coulisseau à fourche (17) étant conçues pour pouvoir être approchées et éloignées du produit dans le sens (10, 36) de la force de retenue ou de serrage.

11. Elément de préhension pour palettisation selon l'une des revendications 1 à 10 précédentes, **caractérisé en ce que** la surface de serrage (23, 25, 26, 32) est rectangulaire, carrée, ronde, semi-circulaire ou elliptique.

12. Elément de préhension pour palettisation selon l'une des revendications 1 à 10 précédentes, **caractérisé en ce qu'**il comporte plusieurs éléments tubulaires (7) parallèles qui forment une surface de serrage interrompue (26).

13. Elément de préhension pour palettisation selon la revendication 1 ou 12, **caractérisé en ce que** la surface de serrage (25, 26, 34) est lisse ou profilée.

14. Elément de préhension pour palettisation selon l'une des revendications 1 à 13 précédentes, **caractérisé en ce que** les ventouses (33) communiquent entre elles à l'aide de tuyaux d'aspiration communs (32) qui mènent à un raccord d'aspiration commun (31).
